Europäisches Patentamt

European Patent Office

Office européen des brevets

(11) Publication number: 0 248 776
A2

# EUROPEAN PATENT APPLICATION

(21) Application number: 87850167.5

(22) Date of filing: 19.05.87

(51) Int. Cl.³: B 29 C 67/14
B 28 B 23/02

(30) Priority: 22.05.86 SE 8602334

(43) Date of publication of application:
09.12.87 Bulletin 87/50

(84) Designated Contracting States:
BE CH DE FR GB IT LI

(71) Applicant: Gram, Hans-Erik
Magnus Ladulasgatan 13
S-116 27 Stockholm(SE)

(71) Applicant: Sorensen, Per
Abildlunden 23
DK-3460 Birkeröd(DK)

(72) Inventor: Gram, Hans-Erik
Magnus Ladulasgatan 13
S-116 27 Stockholm(SE)

(72) Inventor: Sorensen, Per
Abildlunden 23
DK-3460 Birkeröd(DK)

(74) Representative: Rosenquist, Holger et al,
H Albihns Patentbyra AB Box 7664
S-103 94 Stockholm(SE)

(54) Sheet-like products or molded products reinforced with an expanded material.

(57) The invention relates to a method for manufacturing re-inforced products, in which the reinforcement comprises an expanded material, and also relates to products produced in accordance with the method. The expanded material may comprise steel, iron, plastics of various kinds, or foamed plastics. In the manufacture of sheet-like products, the reinforcement is permitted to protrude beyond the edges of the product, so that an overlap-free joint can be formed between the sheets. The products can also be manufactured in various shapes and forms, pipes, corrugated sheets etc. The sheets and products may be comprised of a matrix material in the form of cement, concrete, plastics etc., although the matrix may also comprise the same material as that used for the reinforcement. An optimum structure can be obtained by adapting the perforations and the stretching of the reinforcement material to the expected stresses on the products.

Sheet-like products or molded products reinforced
with an expanded material.

Expanded metal is a metal network produced without joins
and without material waste. The network structure is
obtained by placing metal sheet in a suitable slotting or
stamping machine, and stretching the metal sheet as slots
are formed in a regular pattern therein, so as to produce
an open mesh form. Expanded metal is used widely in the
construction of gratings, screens, floor coverings,
lattice structures etc., and the expanded metal principle
has also been applied in conjunction with materials other
than metal, e.g. plastic materials in the manufacture of
plastics network structures.

By replacing conventional concrete reinforcements, reinforcing rods or reinforcing nets, with an expanded material, it is possible to enhance the strength and the rigidity of the products produced at the same time as the particular properties of the expanded materials, such as
moldability, surface area, variation in mesh size by varying the degrees of stretch in manufacture, etc., enable
the manufacture of the products.

By reinforcing foamed plastics with expanded steel or
plastic material, it is possible to produce high-strength
insulating sheets or panels for building purposes, while
lamination of the side edges of such panels during manufacture will provide a finished, surface-treated sheet or
panel which can replace totally the wall structures of
present day building constructions.

Due to the health hazards presented by asbestos, asbestoscement products are no longer manufactured in some countries, or the manufacture of such products has been forbidden. Much research has been carried out and much effort made in the search for a reinforcing material that will serve as a substitute for asbestos and that possesses corresponding properties, although hitherto no fully satisfactory substitute has been found. Thus, experiments have been made with glass fibers, alkali-resistant glass fibers, steel fibers, various types of plastic fibers, etc., but without sufficiently good results, even though some of the plastics have exhibited promising properties. Polypropylene and polyethylene are chemically highly resistant to the strongly alkaline cement, and will also afford an economically beneficial product.

The advantage afforded by expanded materials over fiber reinforcements is that the expanded-material reinforcement can be positioned and oriented in a manner in which it will be of the greatest use in a cross-section, instead of over the whole area of the cross-section. One or more layers of expanded material are placed on one or more layers of a matrix material. When using a plurality of layers of expanded material, the layers may be off-set in relation to one another, so that the various meshes are not totally in register. Both the matrix and the reinforcement may consist of expanded material, and the matrix and reinforcement may both be made of mutually the same materials or of mutually different materials.

The reinforcement material may stretched in its transverse direction, or when a plurality of reinforcement layers are used, the layers may comprise alternately reinforcements which have been stretched in a longitudinal and in a transverse direction respectively.

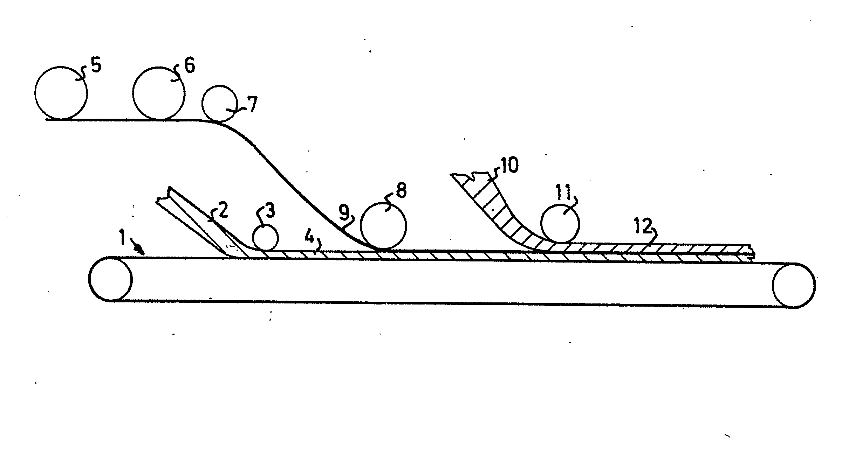

The invention will now be described in more detail with reference to a number of exemplifying examples thereof and also with reference to the drawing, which illustrates schematically an example of a plant for producing sheet-
like products in accordance with the invention.

It will be understood that sheet-manufacturing plants and
apparatus may be constructed in many different ways,
depending on the particular properties desired of the
manufactured product. The plant described hereinafter is
thus only one of many different examples of such manufacturing plants.

The plant illustrated schematically in the drawing comprises a moving conveyer belt 1, a feed nozzle 2 and a
smoothing and squeezing roll 3, and the drawing illustrates how a uniform layer 4 of matrix material is formed on
the conveyer belt 1. As beforementioned, the matrix may be
formed from widely differing materials, such as cement,
foamed plastics, fiber material, gypsum, slag, etc.. In
order to provide the finished sheet-like product with a
treated surface, a surface layer in the form of foil or a
powdered material may be placed or dispersed on the belt 1
prior to applying the matrix layer 4 thereto.

Plastic material, metal sheet, or some other material is
fed from a reel 5 to a slotting or punching device 6,
which in this case has the form of a drum, and is passed
from said drum to one or more rolls 7,8, by means of which
the reinforcement material is stretched to the extent
desired. The roll 8 also serves to press the thus expanded
material 9 into the matrix material 4. A further layer of
matrix material 12 is placed on this reinforcement layer,
by means of a further applicator arrangement 10 and
squeeze or press roll 11. The composite web can then be
provided with a surface layer of foil or powdered material, if so desired.

The web can be divided into suitable lengths in various known ways. The reinforcement material may be cut into lengths per se, or the web can be divided subsequent to passing the last applicator arrangement 10, or subsequent to stabilization of the web further forward on the conveyer belt.

The plant may be extended to enable several layers of reinforcement material and matrix material to be applied, wherewith the said materials may be the same or different. The reinforcement material may also be stretched in its transverse direction, or if several reinforcement layers are used the layers may be slotted and stretched alternately in the respective longitudinal and transverse directions of alternate layers.

The manufacturing process may include vibration, curing, and various other treatment stages of a kind known per se and necessary in respect of the different materials used.

The reinforcement material and matrix material can be varied within wide limits, to suit different purposes and to provide the properties required. The reinforcement material may advantageously comprise expanded metal made of iron or steel, particularly in the case of concrete structures, various kinds of plastics, e.g. polyethylene, polypropylene, polyvinyl alcohol PVC., polyacryl nitrile, etc. Different types of foam plastics may also be used for the reinforcement and/or the matrix layers. Similarly, the matrix may also comprise widely diversified materials, and may consist of cement, concrete, gypsum, slag, plastics of various types and forms, etc. It can be mentioned here, inter alia, that thin cement-bound sheets reinforced in accordance with the invention have been found to possess surprisingly good properties. The use of continuous plastic reinforcements in concrete products greatly facilitates the subsequent building of structures, formation
of partial cavities, and demolition of structures, in comparison with concrete structures that are reinforced with
steel.

Example 1

The manufacture of reinforced concrete slabs

Concrete was deposited on the web to the desired thickness, e.g. 20 mm, subsequent to which a layer of an expanded material, suitably steel, was applied to the concrete
layer, whereafter a further layer of concrete was applied.
The expanded material may comprise metal sheet having a
thickness of 3-4 mm and a slot length of about 50 mm, with
a distance of 4 mm between the adjacent rows of slots and
a stretch length of 40 mm. The expanded material is suitably cut into desired lengths prior to being applied, and
the sheets are separated by interlays in the soft mass.
The sheets are then cured or hardened in any desired
manner. They can be painted or surface-coated in
conjunction with their manufacture.

Example 2

Plastic-reinforced cement-bound sheets

A cement matrix having a thickness of 0.5 - 0.9 mm was
placed on a mold. Layers of perforated and extended
plastic foil having a total thickness of about 0.5 mm were
placed on the cement matrix. An intermediate layer, about
2 mm thick, of, e.g. expanded polystyrene plastic or inorganic material, such as lightweight ballast concrete,
was placed on the plastic foil. The sheet was finished-off
with a top layer of the same construction as the bottom
layer, to a total thickness of about 5 mm and a density between 1000 and 1500 kg/cm$^3$. The sheet had a flexural tensile strength above 20 MPa.

## Example 3

## Plastic-reinforced cement-bound sheet

This sheet was produced in a manner similar to that described in Example 2, but with the difference that the matrix layers, about 0.5 mm thick, embrace a core of reinforcing and matrix material having a thickness of about 4 mm. This sheet was reinforced throughout, and obtained a higher density and better mechanical strength properties.

## Example 4

## A corrugated plate

The sheet produced in accordance with Examples 2 or 3 can be corrugated in a conventional manner, parallel with the direction of the web.

The corrugations can also be made perpendicularly to the web direction, therewith affording greater possibility of varying the material thickness of the sheet. The technique of positioning the reinforcement facilitates deformation of the sheets in the direction of their longitudinal extension, and therewith enables the thickness of the sheets to be varied if desired. In addition to the transversely extending corrugations, the sheet may also be given any desired shape and profile thickness in the direction of its longitudinal extension, by profiling the corrugating roll in the axial plane. This enables well-fitting corrugated sheets to be produced, and also concrete roofing tiles which are lighter, stronger and larger than present day roofing tiles.

Example 5

Manufacture of sheets for simplified erection.

By permitting the reinforcement to project one or more centimeters beyond the edge of the matrix material during the manufacture of the sheets, there is obtained a strip which can be readily nailed to an underlying substrate without needing to drill through the sheet etc. The nail heads and the protruding material can then be covered by a jointing compound and the next sheet in line.

Example 6

Manufacture of insulating sheets

These sheets may be made of a foamed plastics, in which the starting material used may, for example, comprise expanded polystyrene pearls, non-expanded polystyrene pearls, plastics of various kinds that are fermented subsequent to placing the reinforcing material in position. As with the case of cement sheets, the insulating material is deposited on the conveyer belt, whereafter the expanded material is placed on the insulating material and the sheet stabilized, e.g. by hot pressing. When thicker sheets are required, additional layers of reinforcing material and insulating material can be incorporated.

Example 7

Insulating sheets of urethane plastics

The liquid plastic material is mixed with a fermenting agent and pressed out onto the belt or web, whereafter the expanded material is placed on the liquid plastic and the plastic permitted to ferment.

Since the reinforcement material comprises a plastics material, the finished sheets can be sawn without difficulty into the sizes desired, just as readily as non-worked sheets.

Example 8

Pipes

Pipes and other shaped products can be produced by passing soft, uncured, planar lengths from the conveyer belt through a suitable forming machine.

Expanded material can also be used advantageously in the manufacture of other products instead of conventional reinforcements, for example in the manufacture of the hulls of boats etc., where construction is effected in a conventional manner.

## CLAIMS

1. A reinforced product comprising a matrix material reinforced with a plastic foil of polyalkalene plastic, characterized in that the plastic foil is first perforated with slots or holes and then extended for fibrillation, whereby the properties of the product could be controlled in accordance with the stresses expected on the reinforced product.

2. A reinforced product according to Claim 1, characterized in that the polyalkalene plastic is polyethylene or polypropylene.

3. A reinforced product according to Claim 1 or 2, characterized in that the reinforcement projects one or more centimeters beyond the edge of the matrix material, thereby to enable an overlap-free join to be made.

4. A method for producing products reinforced with expanded material in accordance with any of the preceding claims, characterized in that the expanded material comprising polyalkalene foil is perforated with slots or holes and then stretched to fibrillate the plastic.

5. A method according to Claim 4, characterized in that the material is perforated with slots extending in the direction of the longitudinal extension of the material parallel with the molecule orientation; and in that the material is stretched perpendicular to the molecule orientation.

6. A method according to Claim 5, characterized in that the material is stretched in the direction of the molecule orientation.